# EUROPÄISCHE PATENTSCHRIFT

(11) **EP 3 582 374 B1**
(45) Veröffentlichungstag und Bekanntmachung des Hinweises auf die Patenterteilung: **01.05.2024**
(21) Anmeldenummer: 19175879.6
(22) Anmeldetag: 22.05.2019
(51) Int. Cl.: B60L 15/20

(54) **ELEKTRISCHE MASCHINE FÜR EINEN TRAKTIONSANTRIEB, ELEKTRISCHE ANTRIEBSEINRICHTUNG UND VERFAHREN ZUM BETREIBEN EINER ELEKTRISCHEN MASCHINE**
ELECTRIC MACHINE FOR A TRACTION DEVICE, ELECTRIC DRIVE AND METHOD FOR OPERATING AN ELECTRIC MACHINE
MACHINE ELECTRIQUE POUR UN ENTRAÎNEMENT PAR TRACTION, DISPOSITIF D'ENTRAÎNEMENT ÉLECTRIQUE ET PROCÉDÉ DE FONCTIONNEMENT D'UNE MACHINE ÉLECTRIQUE

(30) Priorität: 13.06.2018 DE 102018209406
(43) Veröffentlichungstag der Anmeldung: 18.12.2019
(73) Patentinhaber: Robert Bosch GmbH, 70442 Stuttgart (DE)
(72) Erfinder: Wessner, Jochen, 73728 Esslingen (DE); Wetzel, Gerhard, 70825 Korntal-Muenchingen (DE); Fassnacht, Jochen, 75365 Calw (DE); Keyl, Christoph, 70499 Stuttgart (DE); Kowatsch, Martin, 74343 Hohenhaslach (DE); Lange, Fabian, 30175 Hannover (DE)

(56) Entgegenhaltungen:
- EP-A2- 1 387 472
- WO-A2-2016/030133
- DE-A1-102007 018 734
- DE-A1-102015 117 603
- DE-A1-102016 207 996
- US-A1- 2014 097 719
- US-B1- 9 862 289

## Beschreibung

Die vorliegende Erfindung betrifft eine elektrische Maschine für einen Traktionsantrieb, eine elektrische Antriebseinrichtung und ein Verfahren zum Betreiben einer elektrischen Maschine.

### Stand der Technik

Herkömmliche Elektrofahrzeuge umfassen meist lediglich einen elektrischen Antrieb pro Achse und ein Differential zur Verteilung des Drehmoments, was auch zum Ausgleich von verschiedenen Raddrehzahlen bei einer Kurvenfahrt dienen kann. Da derartige Lösungen sich meist durch geringe Kosten auszeichnen können, werden diese meist bei neuen Konstruktionen (Antrieben ) eingesetzt. Für Hochleistungssportwagen gibt es bereits vier Einzelradantriebe, wodurch ein Torque-Vectoring ermöglicht wird, und auf ein Differential verzichtet werden kann. Solche Lösungen sind allerdings nur für wenige Fahrzeuge in Serie vorgesehen, da hierbei die Kosten hoch ausfallen können.

In der WO 2013/083243 A1 wird ein Antriebsstrang eines allradbetreibbaren Fahrzeugs beschrieben, mit einer ersten Achse und einer zweiten Achse und zwei elektrischen Maschinen, wobei jede Maschine eine der Achshälften antreibt.

In der DE 10 1007 018 734 A1, der US 2014/097719 A1 und in der EP 1 387 472 A2 sind elektrische Maschinen beschrieben.

### Offenbarung der Erfindung

Die vorliegende Erfindung schafft eine elektrische Maschine für einen Traktionsantrieb nach Anspruch 1, eine elektrische Antriebseinrichtung nach Anspruch 9 und ein Verfahren zum Betreiben einer elektrischen Maschine nach Anspruch 10.

Bevorzugte Weiterbildungen sind Gegenstand der Unteransprüche.

### Vorteile der Erfindung

Die der vorliegenden Erfindung zugrunde liegende Idee besteht darin, eine elektrische Maschine für einen Traktionsantrieb, eine elektrische Antriebseinrichtung und ein Verfahren zum Betreiben einer elektrischen Maschine anzugeben, bei welchen eine Einzelradsteuerung des dortigen Drehmoments möglich ist. Des Weiteren ist eine kostengünstige Lösung von Einzelradantrieben an einer Achse beabsichtigt, wodurch ein Torque-Vectoring ermöglicht werden kann und dabei möglichst viele Gleichteile nur einmal in dem Antriebsaufbau und/oder der Maschine bereitgestellt werden müssen.

Erfindungsgemäß umfasst die elektrische Maschine für einen Traktionsantrieb einen Stator mit einem Innenbereich, in welchem ein Statormagnetfeld erzeugbar ist; einen ersten Rotor mit einem ersten Anker und einer ersten Rotorwelle, wobei der erste Anker im Innenbereich angeordnet ist; einen zweiten Rotor mit einem zweiten Anker und einer zweiten Rotorwelle, wobei der zweite Anker entlang der zweiten Rotorwelle und senkrecht zum Statormagnetfeld in den Innenbereich und/oder aus dem Innenbereich heraus verschiebbar ist. Des Weiteren umfasst die elektrische Maschine einen Elektromagnet, welcher außerhalb des Innenbereichs angeordnet ist und durch den ein Hilfsmagnetfeld erzeugbar ist, mittels dessen der zweite Anker entlang der zweiten Rotorwelle und senkrecht zum Statormagnetfeld in den Innenbereich hinein verschiebbar ist, wodurch ein Drehmoment auf den zweiten Rotor variierbar ist. Des Weiteren umfasst die elektrische Maschine eine eine Federeinrichtung, welche an der zweiten Rotorwelle angeordnet ist, wobei mittels der Federeinrichtung eine entlang der zweiten Rotorwelle und aus dem Innenbereich heraus wirkende Rückstellkraft auf den zweiten Rotor erzeugbar ist.

Der Stator und der Elektromagnet können hierbei vorteilhaft als Gleichteile lediglich einmal für den gesamten Antrieb an einer Achse bereitgestellt werden, wodurch Kosten in der Herstellung einsparbar sind und Stückzahleffekte genutzt werden können und Komponentenkosten gespart werden können. Das für den Antrieb nötige Magnetfeld wird im Innenbereich des Stators erzeugt, beispielsweise nach einer Ansteuerung durch ein Bordnetz des Fahrzeugs, nachdem ein Fahrer einen Fahrbefehl (eine Größe des Drehmoments am festen ersten Rotor) an das Bordnetz abgibt. Das Bordnetz könnte auch autonom fahrend ohne einen Fahrerbefehl funktionieren und das Statormagnetfeld entsprechend ansteuern. Da der erste Rotor in seiner Position fixiert ist, wirkt auf diesen stets das gleiche Drehmoment, wenn sich das Statormagnetfeld nicht ändert. Die Variation des Drehmoments an der Achse erfolgt vorteilhaft am zweiten Rotor, wenn dieser mit der Breite seines Ankers aus dem Innebereich, in welchem das Statormagnetfeld wirkt, heraus oder hineinbewegt wird. Im Innenbereich kann das Statormagnetfeld vorteilhaft parallel verlaufende Feldlinien umfassen, etwa zwischen zwei Polschuhen. Die Anker der beiden Rotoren befinden sich vorteilhaft innerhalb dieser parallelen Feldelinien, wobei jener Anteil der Breite des zweiten Ankers als eine wirksame Länge bezeichnet werden kann, auf welche das Statormagnetfeld wirkt und ein Drehmoment am zweiten Rotor erzeugen kann. Der zweite Anker und die zweite Rotorwelle sind vorteilhaft fix miteinander verbunden, mit anderen Worten ist eine relative Bewegung zwischen zweiten Anker und zweiter Rotorwelle vorteilhaft nicht möglich, ebenso beim ersten Rotor. Der zweite Anker kann dann in eine Richtung senkrecht zu den parallelen Feldlinien des Statormagnetfeldes bewegt werden. Der Elektromagnet erzeugt, vorteilhaft nach einer Ansteuerung durch das Bordnetz, eine Kraftkomponente auf die zweite Rotorwelle in das Statormagnetfeld, senkrecht auf dieses, hinein und ist vorteilhaft zum Verschieben des zweiten Rotors in das Statormagnetfeld größer als die Rückstellkraft durch die Federeinrichtung.

Beim Verringern des Hilfsmagnetfelds unter eine Mindestgröße überwiegt erfindungsgemäß die Rückstellkraft R.

Derartige getrennte Radantriebe ermöglichen eine unterschiedliche Drehmomentsteuerung an den Rädern einer Achse, vorteilhaft ein Torque-Vectoring. Die Drehmomentverteilung kann hierbei optimal gewählt werden, etwa vom Bordnetz, wie es der jeweiligen Fahrsituation gerade entspricht. Vorteilhaft kann auf eine zweite elektrische Maschine verzichtet werden, da die gleiche Maschine mit den beiden Rotoren nur einen Stator und ein Statormagnetfeld und vorteilhaft weitere Bauteile, etwa Wechselrichter, Inverter und weiteres lediglich nur in einmaliger Ausführung benötigen kann. Durch die Drehmomentsteuerung kann auf ein Differential verzichtet werden, und ein Getriebe kann an einer oder jeder Rotorwelle vorhanden sein oder es kann darauf verzichtet werden.

Die beiden Rotoren, insbesondere deren Anker, können zusätzlich auch Materialien mit unterschiedlichen Sättigungspolarisationen aufweisen, wodurch ein Unterschied in der Wirkung des Statormagnetfelds auf die beiden Anker erzielt werden kann.

Gemäß einer bevorzugten Ausführungsform der elektrischen Maschine umfasst diese eine elektrische Schnittstelle, mittels welcher der Elektromagnet mit einer Steuereinrichtung zum Ansteuern des Elektromagneten elektrisch verbindbar ist.

Gemäß einer bevorzugten Ausführungsform der elektrischen Maschine umfasst der Elektromagnet eine mit der elektrischen Schnittstelle verbundene Spule.

Die Schnittstelle kann eine Steckereinrichtung zum Anschließen eines elektrischen Stroms, vorteilhaft an die Spule, umfassen. An der Spule kann dann ein Hilfsmagnetfeld erzeugt werden, welches eine Kraftkomponente auf die zweite Rotorwelle auslösen kann, die senkrecht in das Statormagnetfeld hinein wirkt.

Gemäß einer bevorzugten Ausführungsform der elektrischen Maschine umfasst der erste Anker eine erste Breite entlang einer Drehachse und der zweite Anker eine zweite Breite entlang einer Drehachse.

Die Breite erstreckt sich vorteilhaft senkrecht zu den vorteilhaft parallelen Magnetfeldlinien des Statormagnetfeldes.

Gemäß einer bevorzugten Ausführungsform der elektrischen Maschine ist die erste Breite gleich der zweiten Breite.

Sind beide Anker vorteilhaft innerhalb des Statormagnetfeldes im Innenbereich, und weisen beide eine gleiche Sättigungspolarisation auf, so bewirkt das Statormagnetfeld vorteilhaft das gleiche Drehmoment auf den ersten und auf den zweiten Anker bei gleich breiten Ankern.

Gemäß einer bevorzugten Ausführungsform der elektrischen Maschine ist der erste Rotor mit einem ersten Rad und der zweite Rotor mit einem zweiten Rad an einer Achse eines Fahrzeugs kraftwirksam verbindbar.

Gemäß einer bevorzugten Ausführungsform der elektrischen Maschine umfasst diese ein Gehäuse, in welchem der Stator, der erste Rotor, der zweite Rotor, der Elektromagnet und die Federeinrichtung angeordnet sind.

Gemäß einer bevorzugten Ausführungsform der elektrischen Maschine ist der erste Anker stets an einer fixen Position innerhalb des Innenbereichs angeordnet.

Erfindungsgemäß umfasst die elektrische Antriebseinrichtung eine erfindungsgemäße elektrische Maschine und ein Getriebe, welches mit der ersten Rotorwelle und/oder mit der zweiten Rotorwelle verbunden ist.

Die Antriebseinrichtung ist vorteilhaft für einen Traktionsantrieb an einem elektrisch betriebenen Fahrzeug vorgesehen. Das Getriebe kann vorteilhaft optional an einer oder an beiden Rotorwellen, oder zwischen der Rotorwelle und dem angetriebenen Rad, angeordnet sein und mit dem Rad und der zugehörigen Rotorwelle verbunden sein.

Erfindungsgemäß erfolgt bei dem Verfahren zum Betreiben einer erfindungsgemäßen elektrischen Maschine in einem Verfahrensschritt S1 ein Erzeugen eines Statormagnetfelds im Innenbereich durch den Stator mittels einem Ansteuern des Stators durch eine Steuereinheit, wobei ein durch die Steuereinrichtung vorgegebenes Drehmoment am ersten Anker erzeugt wird.ln einem weiteren Verfahrensschritt S2 erfolgt ein Erzeugen eines Hilfsmagnetfelds durch den Elektromagnet und dadurch ein Verschieben des zweiten Ankers entlang der zweiten Rotorwelle und senkrecht zum Statormagnetfeld hinein in den Innenbereich oder aus diesem heraus, wodurch das durch das Statormagnetfeld am zweiten Anker erzeugte Drehmoment nach einer Vorgabe durch die Steuereinrichtung verändert wird.

Gemäß einer bevorzugten Ausführung des Verfahrens steuert im Verfahrensschritt S2 die Steuereinrichtung eine Spule des Elektromagneten über eine elektrische Schnittstelle zum Erzielen einer vorgegebenen Veränderung des Drehmoments an.

Die vorgegebene Veränderung am zweiten Rotor kann durch einen Fahrer oder ein Bordnetz, bei autonom fahrenden Fahrzeugen, vorgegeben werden.

Gemäß einer bevorzugten Ausführung des Verfahrens wird im Verfahrensschritt S2 der zweite Anker aus einer Anfangsposition in den Innenbereich hinein bewegt, wodurch das auf den zweiten Anker erzeugte Drehmoment vergrößert wird, und durch die Federeinrichtung wieder aus dem Innenbereich heraus bewegt wird, wodurch das auf den zweiten Anker erzeugte Drehmoment verkleinert wird.

Die Anfangsposition befindet sich vorteilhaft außerhalb des Innenbereichs und somit außerhalb des Magnetfelds, es kann in der Anfangsposition der zweite Anker jedoch auch teilweise in das Statormagnetfeld und den Innenbererich hineinragen. Beim Hineinbewegen in den Innenbereich vergrößert sich vorteilhaft die wirksame Breite des zweiten Ankers, auf welche das Statormagnetfeld wirkt und somit kann vorteilhaft das am zweiten Anker erzeugte Drehmoment vergrößert werden und umgekehrt beim Herausziehen des zweiten Ankers aus dem Statormagnetfeld verkleinert werden.

Das Verfahren zeichnet sich weiterhin auch durch die bereits in Verbindung mit der elektrischen Maschine und der elektrischen Antriebseinrichtung genannten Merkmale und Vorteile aus und umgekehrt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand der in den schematischen Figuren der Zeichnung angegebenen Ausführungsbeispiele näher erläutert.

Es zeigen:
- Fig. 1: eine schematische Darstellung einer elektrischen Maschine für einen Traktionsantrieb gemäß eines Ausführungsbeispiels der vorliegenden Erfindung;
- Fig. 2: eine schematische Darstellung einer elektrischen Antriebseinrichtung gemäß eines Ausführungsbeispiels der vorliegenden Erfindung; und
- Fig. 3: eine Blockdarstellung der Verfahrensschritte gemäß der vorliegenden Erfindung.

In den Figuren bezeichnen gleiche Bezugszeichen gleiche bzw. funktionsgleiche Elemente.

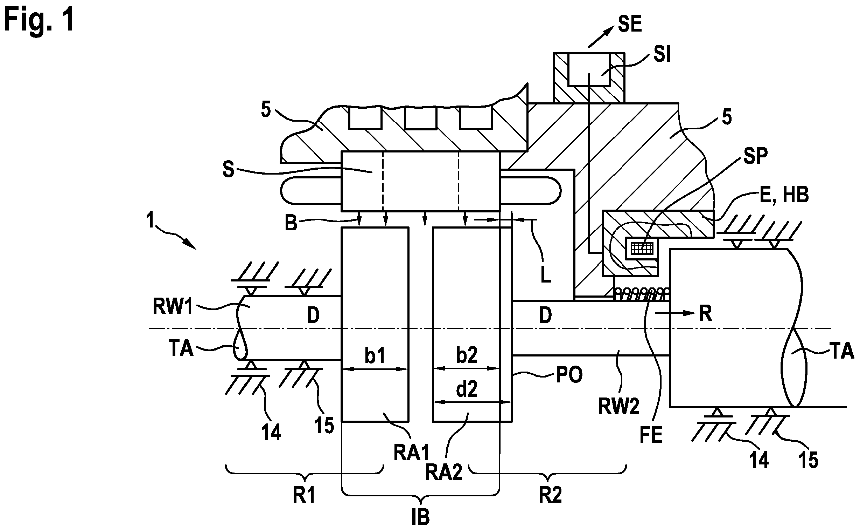

Fig. 1 zeigt eine schematische Darstellung einer elektrischen Maschine für einen Traktionsantrieb gemäß eines Ausführungsbeispiels der vorliegenden Erfindung.

Die elektrische Maschine 1 umfasst einen Stator S mit einem Innenbereich IB, in welchem ein Statormagnetfeld B erzeugbar ist; einen ersten Rotor R1 mit einem ersten Anker RA1 und einer ersten Rotorwelle RW1, wobei der erste Anker RA1 im Innenbereich IB angeordnet ist; und einen zweiten Rotor R2 mit einem zweiten Anker RA2 und einer zweiten Rotorwelle RW2, wobei der zweite Anker RA2 entlang der zweiten Rotorwelle RW2 und senkrecht zum Statormagnetfeld B in den Innenbereich IB und/oder aus dem Innenbereich IB heraus verschiebbar ist. Des Weiteren umfasst die elektrische Maschine 1 einen Elektromagnet E, welcher außerhalb des Innenbereichs IB angeordnet ist und durch den ein Hilfsmagnetfeld HB erzeugbar ist, mittels dessen der zweite Anker RA2 entlang der zweiten Rotorwelle RW2 und senkrecht zum Statormagnetfeld B in den Innenbereich IB hinein verschiebbar ist, wodurch ein Drehmoment auf den zweiten Rotor R2 variierbar ist; und eine Federeinrichtung FE, welche an der zweiten Rotorwelle RW2 angeordnet ist, wobei mittels der Federeinrichtung FE eine entlang der zweiten Rotorwelle RW2 und aus dem Innenbereich IB heraus wirkende Rückstellkraft R auf den zweiten Rotor R2 erzeugbar ist.

In einem Gehäuse 5 kann die elektrische Maschine 5 zusammen mit weiteren Gleichteilen, wie dem Stator S, dem Elektromagnet E, und den Rotoren R1 und R2 angeordnet sein. Die erste sowie die zweite Rotorwelle RW1 und RW2 können jeweils mit einem Festlager 15 und einem Loslager 14 gelagert sein, welche entlang der Rotorwellen RW1 und RW2 angeordnet sein können. Sowohl die erste Rotorwelle RW1 als auch die zweite Rotorwelle RW2 sind vorteilhaft axial symmetrisch und drehbar bezüglich der Drehachse D. Die Drehachse D kann für beide Rotoren gleich (die eine als Verlängerung der anderen) sein, oder unterschiedlich und zumindest parallel zur Drehachse des anderen Rotors sein. Der Elektromagnet E kann einen Magnetkreis mit eine Eisenkern umfassen, so dass das Hilfsmagnetfeld HB entlang der Drehachse D wirkt. Der Elektromagnet E und die Spule SP, welche dieser umfassen kann, können in einer Aufnahme des Gehäuses 5 fixiert sein und über die elektrische Schnittstelle SI kontaktiert und angesteuert werden. Ein Stromanschluss der Spule erfolgt vorteilhaft einfach, da im System des Traktionsantriebs TA, etwa im Bordnetz eines Fahrzeugs, Strom stets vorhanden ist und einfach an die Spule kontaktierbar sein kann. Der Verlust an Drehmoment bei einem aus dem Statormagnetfeld hinausragendem zweiten Anker gegenüber dem ersten Anker kann durch die Differenzbreite L = d2 - b2 ausgedrückt werde, wobei das Statormagnetfeld auf die Breite b2 wirkt wenn nur b2 innerhalb des Statormagnetfeldes B verbleibt. Das Statormagnetfeld B weist vorteilhaft parallele Magnetfeldlinien innerhalb des Innenbereichs IB und beschränkt sich vorteilhaft auf den Innenbereich IB. Die Schnittstelle SI kann mit einer Steuereinrichtung SE , beispielsweise dem Bordnetz eines Fahrzeugs verbunden sein.

Die Anfangsposition P0 befindet sich vorteilhaft außerhalb des Innenbereichs IB und somit außerhalb des Statormagnetfelds B, es kann in der Anfangsposition P0 der zweite Anker RA2 jedoch auch teilweise in das Statormagnetfeld und den Innenbererich hineinragen. Beim Hineinbewegen in den Innenbereich vergrößert sich vorteilhaft die wirksame Breite b2 des zweiten Ankers RA2, auf welche das Statormagnetfeld wirkt und somit kann vorteilhaft das am zweiten Anker erzeugte Drehmoment vergrößert werden und umgekehrt beim Herausziehen des zweiten Ankers aus dem Statormagnetfeld verringert werden.

Die Federeinrichtung FE umfasst erfindungsgemäß eine Feder mit kreisrundem Querschnitt, und ist um die zweite Rotorwelle RW2 entlang deren Ausdehnung in Richtung der Drehachse D angeordnet.

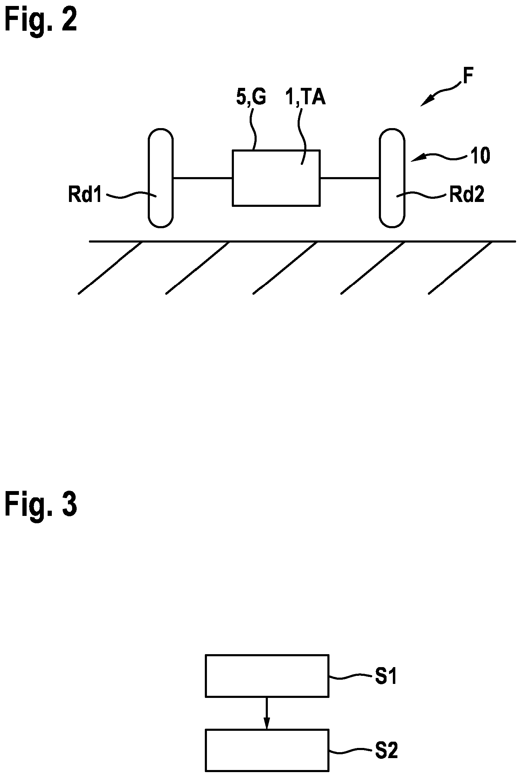

Fig. 2 zeigt eine schematische Darstellung einer elektrischen Antriebseinrichtung gemäß eines Ausführungsbeispiels der vorliegenden Erfindung.

Die elektrische Antriebseinrichtung 10 umfasst eine erfindungsgemäße elektrische Maschine 1, und ein Getriebe G in einem Fahrzeug F, welches mit der ersten Rotorwelle und/oder mit der zweiten Rotorwelle verbunden ist. Die elektrische Antriebseinrichtung 10 stellt vorteilhaft einen Traktionsantrieb TA dar, und ist mit einer Achse vorteilhaft mit einem ersten Rad Rd1 und einem zweiten Rad Rd2 verbunden. Die beiden Räder Rd1 und Rd2 können mit Torque-Vectoring, also unterschiedlichen Drehmomenten, von der Antriebseinrichtung 10 angesteuert werden. Die elektrische Maschine 1, das Getriebe G und weitere Gleichteile können in einem Gehäuse 5 angeordnet sein.

Fig. 3 zeigt eine Blockdarstellung der Verfahrensschritte gemäß der vorliegenden Erfindung.

Beim Verfahren zum Betreiben einer elektrischen Maschine erfolgt in einem Verfahrensschritt S1 ein Erzeugen eines Statormagnetfelds im Innenbereich durch den Stator mittels einem Ansteuern des Stators durch eine Steuereinheit, wobei ein durch die Steuereinrichtung vorgegebenes Drehmoment am ersten Anker erzeugt wird. In einem weiteren Verfahrensschritt S2 erfolgt ein Erzeugen eines Hilfsmagnetfelds durch den Elektromagnet und dadurch ein Verschieben des zweiten Ankers entlang der zweiten Rotorwelle und senkrecht zum Statormagnetfeld hinein in den Innenbereich oder aus diesem heraus, wodurch das durch das Statormagnetfeld am zweiten Anker erzeugte Drehmoment nach einer Vorgabe durch die Steuereinrichtung verändert wird.

Die Verfahrensschritte S1, S2 und S3 und S4 erfolgen vorteilhaft nacheinander. Im Verfahrensschritt S2 kann die Steuereinrichtung eine Spule des Elektromagneten über eine elektrische Schnittstelle zum Erzielen einer vorgegebenen Veränderung des Drehmoments ansteuern. Des Weiteren kann der zweite Anker im Verfahrensschritt S2 aus einer Anfangsposition in den Innenbereich hinein bewegt werden, wodurch das auf den zweiten Anker erzeugte Drehmoment vergrößert werden kann, und durch die Federeinrichtung wieder aus dem Innenbereich heraus bewegt werden kann, wodurch das auf den zweiten Anker erzeugte Drehmoment verkleinert werden kann.

Obwohl die vorliegende Erfindung anhand des bevorzugten Ausführungsbeispiels vorstehend vollständig beschrieben wurde, ist sie darauf nicht beschränkt, sondern wird in den Ansprüchen definiert.

## Patentansprüche

1. Elektrische Maschine (1) für einen Traktionsantrieb (TA), umfassend
- einen Stator (S) mit einem Innenbereich (IB), in welchem ein Statormagnetfeld (B) erzeugbar ist;
- einen ersten Rotor (R1) mit einem ersten Anker (RA1) und einer ersten Rotorwelle (RW1), wobei der erste Anker (RA1) im Innenbereich (IB) angeordnet ist;
- einen zweiten Rotor (R2) mit einem zweiten Anker (RA2) und einer zweiten Rotorwelle (RW2), wobei der zweite Anker (RA2) entlang der zweiten Rotorwelle (RW2) und senkrecht zum Statormagnetfeld (B) in den Innenbereich (IB) und/oder aus dem Innenbereich (IB) heraus verschiebbar ist;
- einen Elektromagnet (E), welcher außerhalb des Innenbereichs (IB) angeordnet ist und durch den ein Hilfsmagnetfeld (HB) erzeugbar ist, mittels dessen der zweite Anker (RA2) entlang der zweiten Rotorwelle (RW2) und senkrecht zum Statormagnetfeld (B) in den Innenbereich (IB) hinein verschiebbar ist, wodurch ein Drehmoment auf den zweiten Rotor (R2) variierbar ist, wobei das Hilfsmagnetfeld (HB) entlang einer Drehachse (D) der zweiten Rotorwelle (RW2) wirksam ist und mit dem Hilfsmagnetfeld (HB) eine Kraftkomponente auf die zweite Rotorwelle (RW2) auslösbar ist, welche senkrecht in das Statormagnetfeld gerichtet ist; und
- eine Federeinrichtung (FE), welche an der zweiten Rotorwelle (RW2) angeordnet ist, wobei mittels der Federeinrichtung (FE) eine entlang der zweiten Rotorwelle (RW2) und aus dem Innenbereich (IB) heraus wirkende Rückstellkraft (R) auf den zweiten Rotor (R2) erzeugbar ist, wobei bei einem Verringern des Hilfsmagnetfelds unter eine Mindestgröße die Rückstellkraft R überwiegt, wobei die Federeinrichtung (FE) eine Feder mit kreisrundem Querschnitt umfasst und um die zweite Rotorwelle (RW2) entlang deren Ausdehnung in Richtung der Drehachse (D) angeordnet ist..

2. Elektrische Maschine (1) nach Anspruch 1, welche eine elektrische Schnittstelle (SI) umfasst, mittels welcher der Elektromagnet (E) mit einer Steuereinrichtung (SE) zum Ansteuern des Elektromagneten (E) elektrisch verbindbar ist.

3. Elektrische Maschine (1) nach Anspruch 2, bei welcher der Elektromagnet (E) eine mit der elektrischen Schnittstelle (SI) verbundene Spule (SP) umfasst.

4. Elektrische Maschine (1) nach einem der Ansprüche 1 bis 3, bei welcher der erste Anker (RA1) eine erste Breite (b1) entlang einer Drehachse (D) umfasst und der zweite Anker (RA2) eine zweite Breite (d2) entlang einer Drehachse (D) umfasst.

5. Elektrische Maschine (1) nach Anspruch 4, bei welcher die erste Breite (b1) gleich der zweiten Breite (d2) ist.

6. Elektrische Maschine (1) nach einem der Ansprüche 1 bis 5, bei welcher der erste Rotor (R1) mit einem ersten Rad und der zweite Rotor (R2) mit einem zweiten Rad an einer Achse eines Fahrzeugs (F) kraftwirksam verbindbar ist.

7. Elektrische Maschine (1) nach einem der Ansprüche 1 bis 6, welche ein Gehäuse (5) umfasst, in welchem der Stator (S), der erste Rotor (R1), der zweite Rotor (R2), der Elektromagnet (E) und die Federeinrichtung (FE) angeordnet sind.

8. Elektrische Maschine (1) nach einem der Ansprüche 1 bis 7, bei welcher der erste Anker (RA1) stets an einer fixen Position innerhalb des Innenbereichs (IB) angeordnet ist.

9. Elektrische Antriebseinrichtung (10) umfassend eine elektrische Maschine (1) nach einem der Ansprüche 1 bis 8, und ein Getriebe (G), welches mit der ersten Rotorwelle (RW1) und/oder mit der zweiten Rotorwelle (RW2) verbunden ist.

10. Verfahren zum Betreiben einer elektrischen Maschine nach einem der Ansprüche 1 bis 8, umfassend die Schritte:
S1) Erzeugen eines Statormagnetfelds (B) im Innenbereich (IB) durch den Stator (S) mittels einem Ansteuern des Stators (S) durch eine Steuereinheit (SE), wobei ein durch die Steuereinrichtung (SE) vorgegebenes Drehmoment am ersten Anker (RA1) erzeugt wird;
S2) Erzeugen eines Hilfsmagnetfelds (HB) durch den Elektromagnet (E) und dadurch Verschieben des zweiten Ankers (RA2) entlang der zweiten Rotorwelle (RW2) und senkrecht zum Statormagnetfeld (B) hinein in den Innenbereich (IB) oder aus diesem heraus, wodurch das durch das Statormagnetfeld (B) am zweiten Anker (RA2) erzeugte Drehmoment nach einer Vorgabe durch die Steuereinrichtung (SE) verändert wird.

11. Verfahren nach Anspruch 10, bei welchem im Verfahrensschritt S2 die Steuereinrichtung (SE) eine Spule (SP) des Elektromagneten (E) über eine elektrische Schnittstelle (SI) zum Erzielen einer vorgegebenen Veränderung des Drehmoments ansteuert.

12. Verfahren nach Anspruch 10 oder 11, bei welchem der zweite Anker (RA2) im Verfahrensschritt S2 aus einer Anfangsposition (P0) in den Innenbereich (IB) hinein bewegt wird, wodurch das auf den zweiten Anker (RA2) erzeugte Drehmoment (D) vergrößert wird, und durch die Federeinrichtung (FE) wieder aus dem Innenbereich (IB) heraus bewegt wird, wodurch das auf den zweiten Anker (RA2) erzeugte Drehmoment (D) verkleinert wird.

## Claims

1. Electric machine (1) for a traction drive (TA), comprising
- a stator (S) with an inner region (IB), in which a stator magnetic field (B) can be generated;
- a first rotor (R1) with a first armature (RA1) and a first rotor shaft (RW1), wherein the first armature (RA1) is arranged in the inner region (IB);
- a second rotor (R2) with a second armature (RA2) and a second rotor shaft (RW2), wherein the second armature (RA2) is displaceable along the second rotor shaft (RW2) and perpendicularly to the stator magnetic field (B) into the inner region (IB) and/or out of the inner region (IB) ;
- an electromagnet (E), which is arranged outside the inner region (IB) and by which an auxiliary magnetic field (HB) can be generated, by means of which the second armature (RA2) can be displaced along the second rotor shaft (RW2) and perpendicularly to the stator magnetic field (B) into the inner region (IB), whereby a torque acting on the second rotor (R2) can be varied, wherein the auxiliary magnetic field (HB) is effective along an axis of rotation (D) of the second rotor shaft (RW2) and with the auxiliary magnetic field (HB) a force component which is directed perpendicularly into the stator magnetic field can be initiated to act on the second rotor shaft (RW2); and
- a spring device (FE), which is arranged on the second rotor shaft (RW2), wherein a restoring force (R), acting along the second rotor shaft (RW2) and out of the inner region (IB), can be generated by means of the spring device (FE) to act on the second rotor (R2), wherein the restoring force R predominates when the auxiliary magnetic field is reduced below a minimum size, wherein the spring device (FE) comprises a spring with a circular cross section and is arranged around the second rotor shaft (RW2), along the extent thereof in the direction of the axis of rotation (D).

2. Electric machine (1) according to Claim 1, which comprises an electrical interface (SI), by means of which the electromagnet (E) can be electrically connected to a control device (SE) for activating the electromagnet (E).

3. Electric machine (1) according to Claim 2, in which the electromagnet (E) comprises a coil (SP) connected to the electrical interface (SI).

4. Electric machine (1) according to one of Claims 1 to 3, in which the first armature (RA1) comprises a first width (b1) along an axis of rotation (D) and the second armature (RA2) comprises a second width (d2) along an axis of rotation (D).

5. Electric machine (1) according to Claim 4, in which the first width (b1) is equal to the second width (d2).

6. Electric machine (1) according to one of Claims 1 to 5, in which the first rotor (R1) can be connected force-effectively to a first wheel and the second rotor (R2) can be connected force-effectively to a second wheel on an axle of a vehicle (F).

7. Electric machine (1) according to one of Claims 1 to 6, which comprises a housing (5), in which the stator (S), the first rotor (R1), the second rotor (R2), the electromagnet (E) and the spring device (FE) are arranged.

8. Electric machine (1) according to one of Claims 1 to 7, in which the first armature (RA1) is always arranged in a fixed position within the inner region (IB).

9. Electric drive device (10) comprising an electric machine (1) according to one of Claims 1 to 8, and a transmission (G), which is connected to the first rotor shaft (RW1) and/or to the second rotor shaft (RW2).

10. Method for operating an electric machine according to one of Claims 1 to 8, comprising the steps of:
S1) generating a stator magnetic field (B) in the inner region (IB) by the stator (S) by means of activating the stator (S) by a control unit (SE), wherein a torque specified by the control device (SE) is generated to act on the first armature (RA1);
S2) generating an auxiliary magnetic field (HB) by the electromagnet (E) and thereby displacing the second armature (RA2) along the second rotor shaft (RW2) and perpendicularly to the stator magnetic field (B) into the inner region (IB) or out of it, whereby the torque generated by the stator magnetic field (B) to act on the second armature (RA2) is changed in accordance with a specification by the control device (SE).

11. Method according to Claim 10, in which, in method step S2, the control device (SE) activates a coil (SP) of the electromagnet (E) via an electrical interface (SI) to achieve a specified change in the torque.

12. Method according to Claim 10 or 11, in which, in method step S2, the second armature (RA2) is moved out of an initial position (P0) into the inner region (IB), whereby the torque (D) generated to act on the second armature (RA2) is increased, and is moved out of the inner region (IB) again by the spring device (FE), whereby the torque (D) generated to act on the second armature (RA2) is decreased.

## Revendications

1. Machine électrique (1) pour un entraînement de traction (TA), comprenant
- un stator (S) pourvu d'une zone intérieure (IB) dans laquelle un champ magnétique de stator (B) peut être généré ;
- un premier rotor (R1) pourvu d'un premier induit (RA1) et d'un premier arbre de rotor (RW1), le premier induit (RA1) étant disposé dans la zone intérieure (IB) ;
- un deuxième rotor (R2) pourvu d'un deuxième induit (RA2) et d'un deuxième arbre de rotor (RW2), le deuxième induit (RA2) pouvant être déplacé le long du deuxième arbre de rotor (RW2) et perpendiculairement au champ magnétique de stator (B) dans la zone intérieure (IB) et/ou hors de la zone intérieure (IB) ;
- un électroaimant (E) qui est disposé à l'extérieur de la zone intérieure (IB) et qui permet de générer un champ magnétique auxiliaire (HB) au moyen duquel le deuxième induit (RA2) peut être déplacé le long du deuxième arbre de rotor (RW2) et perpendiculairement au champ magnétique de stator (B) dans la zone intérieure (IB) de sorte qu'un couple sur le deuxième rotor (R2) est variable, dans laquelle le champ magnétique auxiliaire (HB) agit le long d'un axe de rotation (D) du deuxième arbre de rotor (RW2), et le champ magnétique auxiliaire (HB) permet de déclencher sur le deuxième arbre de rotor (RW2) une composante de force qui est dirigée perpendiculairement dans le champ magnétique de stator ;
- un dispositif faisant ressort (FE) qui est disposé sur le deuxième arbre de rotor (RW2), le dispositif faisant ressort (FE) permettant de générer une force de rappel (R) sur le deuxième rotor (R2), agissant le long du deuxième arbre de rotor (RW2) et en sortant de la zone intérieure (IB), dans laquelle la force de rappel (R) est prépondérante lorsque le champ magnétique auxiliaire est diminué au-dessous d'une dimension minimale, dans laquelle le dispositif faisant ressort (FE) comprend un ressort à section transversale circulaire et est disposé autour du deuxième arbre de rotor (RW2) le long de l'étendue de celui-ci en direction de l'axe de rotation (D) .

2. Machine électrique (1) selon la revendication 1, qui comprend une interface électrique (SI) au moyen de laquelle l'électroaimant (E) peut être relié électriquement à un dispositif de commande (SE) pour piloter l'électroaimant (E).

3. Machine électrique (1) selon la revendication 2, dans laquelle l'électroaimant (E) comprend une bobine (SP) reliée à l'interface électrique (SI).

4. Machine électrique (1) selon l'une quelconque des revendications 1 à 3, dans laquelle le premier induit (RA1) comprend une première largeur (b1) le long d'un axe de rotation (D) et le deuxième induit (RA2) comprend une deuxième largeur (d2) le long d'un axe de rotation (D).

5. Machine électrique (1) selon la revendication 4, dans laquelle la première largeur (b1) est égale à la deuxième largeur (d2).

6. Machine électrique (1) selon l'une quelconque des revendications 1 à 5, dans laquelle le premier rotor (R1) peut être relié en effet de force à une première roue, et le deuxième rotor (R2) peut être relié en effet de force à une deuxième roue sur l'essieu d'un véhicule (F).

7. Machine électrique (1) selon l'une quelconque des revendications 1 à 6, qui comprend un boîtier (5) dans lequel le stator (S), le premier rotor (R1), le deuxième rotor (R2), l'électroaimant (E) et le dispositif faisant ressort (FE) sont disposés.

8. Machine électrique (1) selon l'une quelconque des revendications 1 à 7, dans laquelle le premier induit (RA1) est toujours disposé dans une position fixe à l'intérieur de la zone intérieure (IB).

9. Dispositif d'entraînement électrique (10), comprenant une machine électrique (1) selon l'une quelconque des revendications 1 à 8, et une boîte de vitesses (G) qui est reliée au premier arbre de rotor (RW1) et/ou au deuxième arbre de rotor (RW2).

10. Procédé permettant de faire fonctionner une machine électrique selon l'une quelconque des revendications 1 à 8, comprenant les étapes suivantes consistant à :
S1) générer un champ magnétique de stator (B) dans la zone intérieure (IB) par le stator (S) au moyen d'un pilotage du stator (S) par une unité de commande (SE), dans lequel un couple spécifié par le dispositif de commande (SE) est généré au niveau du premier induit (RA1) ;
S2) générer un champ magnétique auxiliaire (HB) par l'électroaimant (E) et de ce fait déplacer le deuxième induit (RA2) le long du deuxième arbre de rotor (RW2) et perpendiculairement au champ magnétique de stator (B) dans la zone intérieure (IB) ou hors de celle-ci, de sorte que le couple généré par le champ magnétique de stator (B) au niveau du deuxième induit (RA2) soit modifié selon une spécification par le dispositif de commande (SE).

11. Procédé selon la revendication 10, dans lequel à l'étape de procédé S2, le dispositif de commande (SE) pilote une bobine (SP) de l'électroaimant (E) par une interface électrique (SI) afin d'obtenir une variation spécifiée du couple.

12. Procédé selon la revendication 10 ou 11, dans lequel à l'étape de procédé S2, le deuxième induit (RA2) est déplacé d'une position initiale (P0) dans la zone intérieure (IB) de façon à augmenter le couple (D) généré sur le deuxième induit (RA2), et est ressorti de la zone intérieure (IB) par le dispositif faisant ressort (FE) de façon à diminuer le couple (D) généré sur le deuxième induit (RA2).
